**Europäisches Patentamt**

**European Patent Office**

**Office européen des brevets**

(11) Veröffentlichungsnummer: **0 200 800**
**B1**

(12) # EUROPÄISCHE PATENTSCHRIFT

(45) Veröffentlichungstag der Patentschrift:
**18.10.89**

(51) Int. Cl.⁴: **F 16 B 13/02**

(21) Anmeldenummer: **85105631.7**

(22) Anmeldetag: **08.05.85**

(54) Einrichtung zum Verbinden zweier Teile.

<table>
<tr><td>

(43) Veröffentlichungstag der Anmeldung:
**12.11.86 Patentblatt 86/46**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**EP-A- 0 105 865**
**WO-A-81/02332**
**DE-A- 1 475 082**
**DE-A- 1 945 377**
**GB-A- 2 058 990**
**US-A- 1 997 513**

</td><td>

(73) Patentinhaber: **Astl, Franz, A-6345 Kössen 249d (AT)**

(72) Erfinder: **Astl, Franz, A-6345 Kössen 249d (AT)**

(74) Vertreter: **Klingseisen, Franz, Dipl.-Ing. et al, Dr. F. Zumstein sen. Dr. E. Assmann Dr. F. Zumstein jun. Dipl.-Ing. F. Klingseisen Bräuhausstrasse 4, D-8000 München 2 (DE)**

</td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Einrichtung zum Verbinden zweier Teile nach dem Oberbegriff des Anspruchs 1.

Aus der DE-A-1 475 082 ist ein zylindrischer Mauerdübel aus einem harten, thermoplastischen Kunststoff bekannt, der einen elastischen Kunststoffdübel ersetzen soll, der nach der Lehre dieser Druckschrift keiner dauernden Zugbeanspruchung standhält. Da der Mauerdübel aus hartem, thermoplastischem Kunststoff eine sehr glatte Oberfläche hat, wird seine Umfangsfläche durch Aufkleben von Quarzsand, scharfkantigem Kunststoffgranulat und dergleichen griffig gestaltet, so daß die so angerauhte Oberfläche die Reibung zwischen dem Mauerdübel und der Bohrlochinnenwand erhöht. Zur Halterung dieses Mauerdübels in dem Bohrloch muß eine Schraube in den hohlzylindrischen Dübel eingeschraubt werden, damit der Dübel aufgespreizt wird, wofür eine besondere Nutenanordnung vorgesehen ist, damit die Haltewirkung in der Mauer erzielt wird. Hierbei dient die angerauhte Oberfläche des Dübels nur dazu, das Einschrauben der Schraube in den in das Bohrloch eingesteckten Mauerdübel zu ermöglichen.

Es ist weiterhin aus der DE-A-1 945 377 ein dübelähnlicher Steckbolzen bekannt, der über seinen Umfang verteilt eine Vielzahl von Zähnen aufweist, die radial oder zum Kopf des Steckbolzens hin geneigt aus der Mantelfläche vorstehen. Die korrespondierende Bohrung weist eine glatte Wandung auf. Der Steckbolzen wird in die Bohrung eingeschlagen, wobei sich die Zähne an die Wandung der Bohrung anlegen und bei Zugeinwirkung sich daran verspreizen. Bei dieser Ausführungsform ist die Einschubrichtung des Steckbolzens vorgegeben.

Aus der EP-A-45 787 ist ferner eine Einrichtung zum lösbaren Verbinden zweier Teile bekannt, wobei zumindest an einem Teil eine Lage von nahe nebeneinander angeordneten, elastischen Borsten oder dergleichen ausgebildet und die Gegenfläche des jeweils anderen Teils uneben ausgebildet, vorzugsweise ebenfalls mit elastischen Borsten versehen ist. Bei dieser Ausgestaltung ist keine Einschubrichtung vorgegeben, jedoch hält eine Verbindung dieser Art wegen der elastischen Borsten höheren Zugkräften in Löserichtung nicht stand.

Der Erfindung liegt die Aufgabe zugrunde, eine Einrichtung der eingangs angegebenen Art so auszubilden, daß ohne zusätzliche Hilfsmittel (Schraube) eine außerordentlich feste und dauerhafte Verbindung zwischen den beiden Teilen erreicht wird, wobei die Einrichtung ohne vorgegebene Einschubrichtung verwendbar sein soll.

Diese Aufgabe wird durch die Merkmale im Kennzeichen des Anspruchs 1 gelöst. Durch diese Ausgestaltung kann ein beliebig gestaltetes Teil in eine entsprechende Ausnehmung des anderen Teils so eingesetzt werden, daß sich eine außerordentlich feste und dauerhafte Verbindung ergibt, ohne daß dazu weitere Hilfsmittel oder Einrichtungen, wie eine Schraube, erforderlich sind. Durch die Lagerung der Elemente aus starrem Material auf einem verformbaren Trägermaterial kippen die starren Elemente beim Einschieben oder Einschlagen des einen Teils in eine Ausnehmung oder dergleichen des anderen Teils, worauf sie sich mit der gegenüberliegenden Fläche verspreizen. Durch die Kippbewegung der starren Elemente, die nach allen Seiten ausgeführt werden kann, ist eine bestimmte Einschubrichtung nicht vorgegeben. Ferner ergibt sich durch die starren Elemente eine sehr feste Verbindung, die auch hohen Zugkräften standhält. Hierdurch wird die Einrichtung sehr vielseitig einsetzbar, wobei auch Metallteile sehr fest miteinander verbunden werden können.

Vorteilhafte Ausgestaltungen der Erfindung sind in den weiteren Ansprüchen angegeben.

Die Erfindung wird beispielsweise anhand der Zeichnung näher erläutert. Es zeigen:

Figur 1 in schematischer Darstellung ein mit körnigem Material beschichtetes Einschubteil beim Einschieben in eine Ausnehmung eines anderen Teils;

Figur 2 eine abgewandelte Ausführungsform der Lagerung des körnigen Materials;

Figuren 3 und 4 den Figuren 1 und 2 entsprechende Aufbringung des körnigen Materials auf der Innenfläche einer Ausnehmung;

Figuren 5 und 6 die Beschichtung einer Hülse mit körnigem Material zum Verbinden zweier Werkstücke;

Figuren 7 und 8 eine Anordnung mit Beschichtung der einander gegenüberliegenden Flächen beim Einschub und nach teilweisem Einrasten der Elemente, und

Figur 9 eine beschichtete Folie im Schnitt.

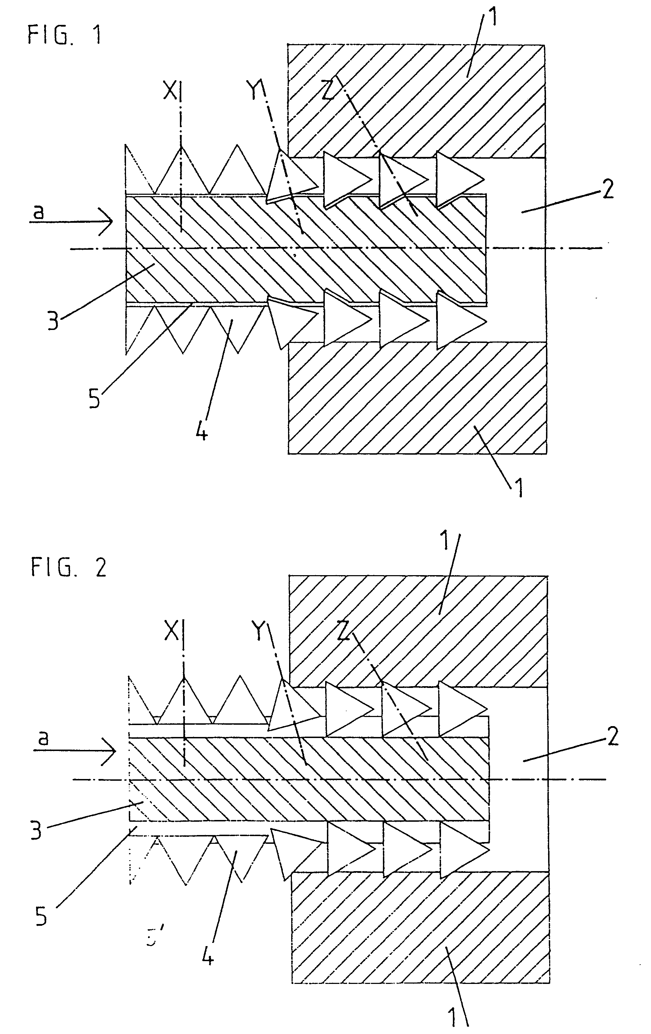

Die Einrichtung kann zur Verbindung von zwei Teilen 1, 3 immer dann herangezogen werden, wenn die beiden Teile 1, 3 Flächen aufweisen, die parallel zur Verschieberichtung verlaufen und aneinander vorbei bewegt werden. Beispielsweise kann in den Figuren 1 bis 4 das Teil 1 eine Bohrung oder einen langgestreckten Spalt als Ausnehmung 2 aufweisen, während das Einschubteil 3 in entsprechender Weise zylindrisch oder als Platte ausgebildet sein kann. Wenigstens eine der einander gegenüberliegenden Flächen ist mit einer Lage aus starren Elementen 4 beschichtet, die in den Figuren schematisch als Dreieckselemente wiedergegeben sind. Diese Elemente 4 können aus Sand, körnigem Glas, Korund, Metall oder Kunststoff bestehen und eine unregelmäßige, kantige Form haben. Es können auch Splitter aus verschiedenen Materialien als Elemente 4 aufgebracht sein.

Bei der Ausführungsform nach Figur 1 sind die Elemente 4 mittels einer Klebeschicht 5 auf dem Einschubteil 3 befestigt. Die Korngröße der Elemente 4 ist so gewählt, daß der Durchmesser der Elemente 4 etwas größer ist als der vorgesehene Abstand zwischen den einander gegenüberliegenden Flächen der Teile 1 und 3. Die starren, kantigen Elemente 4 haben zunächst die in Figur 1 durch eine strichpunktierte Linie X wiedergegebene Ausrichtung relativ zur Oberfläche des Einschubteils 3, wobei sich diese Ausrichtung durch die Beschichtung der Oberfläche mit dem körnigen Material und dessen Haftung an der Klebeschicht 5 ergibt. Beim Einschieben in der Einschubrichtung a werden zunächst die Elemente 4 leicht gekippt, wie dies durch die strichpunktierte Linie Y angedeutet ist, da die Abmessung der Elemente 4 größer gewählt ist als der vorgegebene Abstand zwischen den einander gegenüberliegenden Flächen der Teile 1 und 3. Dabei werden die Elemente 4 in das Material des Teils 3 eingepreßt. Das Einschubteil 3 kann aus verformbarem Material wie Holz oder aus elastischem Material bestehen. Bei tieferem Eindringen des Einschubteils 3 in die Ausnehmung 2 werden die Elemente 4 stärker gekippt, wie dies durch die strichpunktierte Linie Z angedeutet ist, wobei sich die Elemente 4 zwischen den einander gegenüberliegenden Flächen verspreizen. Bei Angreifen einer Zugkraft entgegen der Einschubrichtung a müßten die Elemente 4 in die Gegenrichtung gekippt werden, wodurch sich eine hohe Haltekraft des Einschubteils 3 im Teil 1 ergibt.

Die Korngröße der Elemente 4 wird in Abhängigkeit von der Materialpaarung gewählt. Bei Verwendung von weichem Holz oder Spanplatten als Teil 1 wird eine Korngröße von beispielsweise 1 bis 2 mm gewählt, während bei hartem Holz eine Korngröße von beispielsweise 0,5 mm vorgesehen wird. Bei Verwendung von Metall für die Teile 1, 3 kann eine noch kleinere Korngröße in Verbindung mit einem entsprechend verengten Spalt zwischen den einander gegenüberliegenden Flächen gewählt werden.

Während bei der Ausführungsform nach Figur 1 ein verformbares oder elastisches Material für das Einschubteil 3 gewählt ist, ist bei der Ausführungsform nach Figur 2 eine dickere Beschichtung 5 auf dem Einschubteil 3 vorgesehen, das aus einem harten Material bestehen kann. Die dickere Klebstoffschicht 5 wird vorzugsweise elastisch ausgebildet. Es kann sich auch um eine Gummischicht oder eine Schicht aus elastischem Kunststoff handeln. Beim Eindrücken des Einschubteils 3 werden die Elemente 4 in die Schicht 5 eingedrückt und durch das elastische Material dieser Schicht 5 an der gegenüberliegenden Fläche des Teils 1 angepreßt.

Es ist auch möglich, eine elastische Beschichtung eines Teils als Trägermaterial für die Elemente 4 vorzusehen und diese auf dieser elastischen Schicht durch Kleben, Vulkanisieren oder Einlagerung in schmelzflüssigem Zustand der Schicht 5 zu befestigen. Ferner ist es möglich, die auf eine elastische Schicht 5 aufgebrachten Elemente 4 mittels eines Sprühklebers weiter zu fixieren, wie dies bei 5' in Figur 2 angedeutet ist. Hierdurch kann die Verbindung der Elemente 4 verstärkt und der Kippeffekt der Elemente eingestellt werden. Ferner ist es möglich, einen Kunststofffilm flüssig auf ein Teil aufzubringen, die körnigen oder splitterförmigen Elemente 4 in den noch flüssigen Film einzulagern und diesen dann verfestigen zu lassen. Es kann auch ein thermoplastisches Material als Trägerschicht für die Elemente 4 vorgesehen werden, das bei Wärmeeinwirkung nachgiebig wird. Bei Verwendung eines Klebers wird vorzugsweise ein Zwei-Komponenten-Kleber vorgesehen, um eine sehr feste Haftung der Elemente 4 an dem betreffenden Teil zu erhalten.

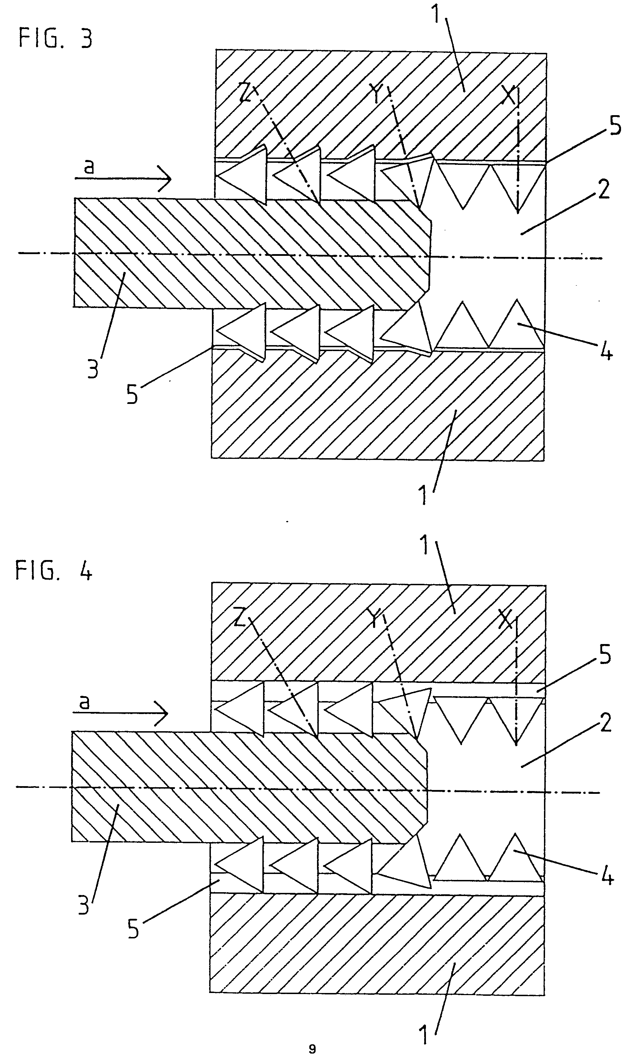

Figur 3 zeigt eine Ausführungsform, bei der die Beschichtung aus den Elementen 4 auf den Innenflächen einer Ausnehmung 2 mittels einer Klebstoffschicht 5 angebracht ist. In diesem Falle besteht das Teil 1 aus verformbarem Material. Im übrigen entspricht diese Anordnung der in Figur 1 wiedergegebenen. Die Ausführungsform nach Figur 4 entspricht der nach Figur 2, wobei die elastische Schicht 5 an den Innenwänden der Ausnehmung 2 und nicht am Einschubteil 3 angebracht ist.

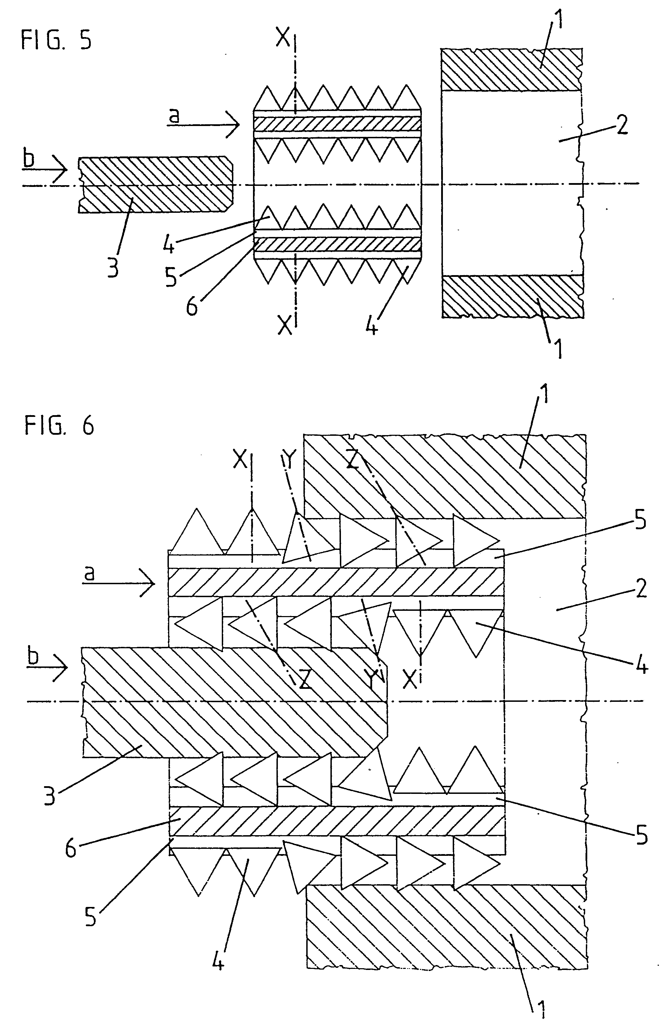

Figuren 5 und 6 zeigen eine Hülse 6, die auf dem Innen- und Außenumfang mit den Elementen 4 beschichtet ist, wobei bei diesem Ausführungsbeispiel auf der Innen- und Außenseite eine elastische Schicht 5 ähnlich der Ausführungsform nach Figur 2 vorgesehen ist. Hierbei wird zunächst nach Figur 5 die Hülse in der Einschubrichtung a in die Ausnehmung 2 eingedrückt, worauf das Einschubteil 3 in Einschubrichtung b eingedrückt wird.

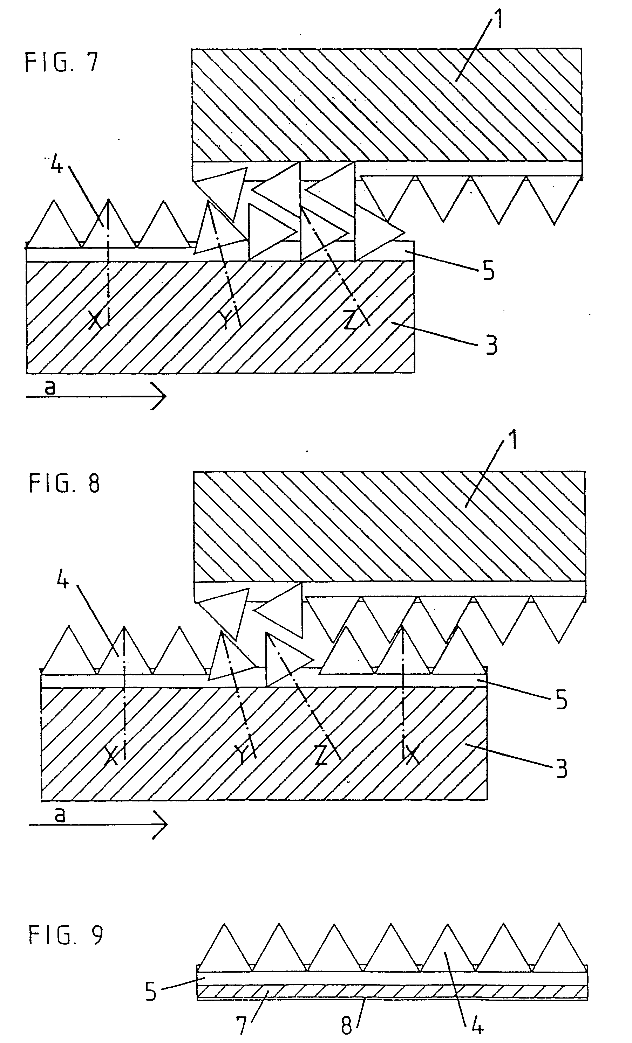

Figuren 7 und 8 erläutern den Kippvorgang an den Elementen 4 einer Beschichtung an den beiden einander gegenüberliegenden Flächen. Beim Einschub nach Figur 7 kippen die einzelnen Elemente 4 in der schon beschriebenen Weise, worauf nach Einschub die einzelnen Elemente zurückfedern und sich mit den gegenüberliegenden verzahnen, wie dies in Figur 8 an der Stelle der rechtsliegenden strichpunktierten Achse X wiedergegeben ist. Bei einer elastischen Trägerschaft 5 ergibt sich mehr die in Figur 8 wiedergegebene Anordnung nach Einschub, während bei einem verformbaren Material der Trägerschicht 5 sich nach Einschub mehr die in Figur 7 wiedergegebene Anordnung ergibt.

Figur 9 zeigt eine Folie 7 aus Metall, Kunststoff, Gummi oder dergleichen, die mit einer Trägerschicht 5 auf einer Seite beschichtet ist, die aus Klebestoff, Kunststoff, Gummi oder dergleichen bestehen kann, auf der die splitterförmigen bzw. kantigen körnigen Elemente 4 aufgeklebt, vulkanisiert oder eingelagert sind. Auf der gegenüberliegenden Seite ist die Folie 7 mit einer Klebeschicht 8 versehen, mittels der die Folie auf der Fläche eines beliebigen Teiles befestigt werden kann.

Die miteinander zu verbindenden Teile können die verschiedensten Formgebungen haben. So kann es sich beispielsweise um Profile handeln, die mittels eines Zwischenstückes ähnlich dem Einschubteil 3 in den Figuren 1 und 2 miteinander verbunden werden. Die Ausnehmung 2 kann als Bohrung, Nut oder Profilhohlraum gestaltet sein. Das Einschubteil 3 kann als Dübel, Zapfen, Feder, Flachstück oder Profil je nach Anwendungsgebiet der Verbindungseinrichtung gestaltet sein. Die Verbindungseinrichtung ist vielfältig einsetzbar, beispielsweise im Möbel- und Innenausbau zum Befestigen von Bauteilen anstelle von Nieten oder Nägeln, zum Verbinden von Bauteilen im Maschinenbau anstelle von Kerb-Stiften und dergleichen.

Die Haltekraft der Verbindungseinrichtung kann durch Einstellen der Elastizität der Trägerschicht 5 variiert werden. So kann beispielsweise ein hartgummiähnliches Material oder ein weichelastisches Material verwendet werden.

Die splitterförmigen bzw. kantigen körnigen Elemente 4 können auch aus kurzen Teilstücken von harten Kunststoffasern wie Nylon oder dergleichen bestehen. Für einen bestimmten Verwendungszweck wird eine Beschichtung aus im wesentlichen gleich großen Elementen 4 vorgesehen, so daß im wesentlichen alle Elemente auf einer Flächeneinheit mit der gegenüberliegenden Fläche in Eingriff treten. Dabei können die Elemente 4 so auf der Trägerschicht 5 aufgebracht werden, daß sie dicht nebeneinander liegen oder auch einen gewissen Abstand voneinander haben. Auch hierdurch kann die Haltekraft der Verbindungseinrichtung eingestellt werden.

Eine weitere Möglichkeit, die Haltekraft der Verbindungseinrichtung einzustellen, besteht darin, den Abstand der einander gegenüberliegenden Flächen der zu verbindenden Teile im Verhältnis zur Höhe der an einer oder beiden Flächen vorstehenden Elemente 4 auszulegen. Ist der Abstand nur geringfügig kleiner als die Höhe der vorstehenden Elemente 4, so ergibt sich eine geringere Haltekraft als bei einer Ausführungsform mit demgegenüber verkleinertem Abstand. Diese Auslegung ist unabhängig von der Wahl der Korngröße der Elemente 4 in Abhängigkeit von der Materialpaarung der zu verbindenden Teile.

Weiter ist es möglich, die Dicke der Trägerschicht 5 zu variieren. Im Falle einer elastischen Trägerschicht 5 kann diese so stark ausgebildet werden, daß die Dicke etwa dem durchschnittlichen Durchmesser der Elemente 4 entspricht. Je nach Verwendung des unter der Trägerschicht 5 befindlichen Materials kann die Trägerschicht 5 auch dünner ausgelegt werden, beispielsweise wenn sich darunter ein verformbares Material befindet. Die Elemente 4 können auch in die Oberfläche beispielsweise eines Kunststoffteiles unmittelbar eingelagert sein, so daß es keiner gesonderten Träger- oder Klebeschicht 5 bedarf.

Die Elemente 4 selbst haben meist eine unregelmäßige Gestalt, wobei sie mehr oder weniger scharfkantig sein können, je nach der erwünschten Eindringtiefe und Verspreizung. Auch hierdurch kann die Haltekraft beeinflußt werden. Beispielsweise ergibt sich bei einer nahezu kugelförmigen Gestalt der Elemente 4 eine relativ geringe Haltekraft dadurch, daß die Elemente leicht in der Gegenrichtung zurückfedern und leichter an der gegenüberliegenden Fläche gleiten können als scharfkantige Elemente.

Üblicherweise wird die Einrichtung zum dauernden Verbinden von Teilen vorgesehen, es ist aber je nach Einstellung der Haltekraft, wie zuvor beschrieben, auch eine für bestimmte Zwecke lösbare Verbindung möglich.

Die Fläche des Trägermaterials, auf der die Beschichtung aus Elementen 4 aufgebracht wird, ist vorzugsweise glatt, wie auch die den Elementen 4 gegenüberliegende Eingriffsfläche des anderen Teils. Es ist aber auch möglich, diese Eingriffsfläche uneben auszubilden, wie dies beispielsweise auf der Innenwand einer Bohrung in eine Spanplatte der Fall ist. In diesem Falle wird ein größerer Korndurchmesser für die Elemente 4 vorgesehen. Die Beschichtung mit Elementen 4 kann auch nur teilweise auf einer der zu verbindenden Flächen vorgesehen sein, beispielsweise in Form von Streifen, die sich in Einschubrichtung erstrecken.

## Patentansprüche

1. Einrichtung zum Verbinden eines ersten Teils (1), das eine Ausnehmung, Höhlung oder dgl. (2) aufweist, mit einem in die Ausnehmung, Höhlung oder dgl. einschiebbaren zweiten Teil (3), wobei im wesentlichen senkrecht zur Einschubrichtung vorstehende Elemente (4) aus körnigem, starrem Material auf der äußeren Oberfläche eines der Teile (1, 3) angeordnet sind, dadurch gekennzeichnet, daß die quer zur Einschubrichtung vorstehende Länge der Elemente (4) größer als der Abstand zwischen der mit den Elementen versehenen Fläche und der Gegenfläche am anderen Teil ist, und daß die Elemente (4) auf einem elastischen verformbaren Trägermaterial aufgebracht sind und bei der Relativbewegung der beiden Teile (1, 3) zueinander eine elastische Kippbewegung ausführen, wobei die Elemente (4) an zumindest einem Teil der inneren Oberfläche des ersten Teiles (1) und/oder der äußeren Oberfläche des zweiten Teils (3) angeordnet sind.

2. Einrichtung nach Anspruch 1, dadurch gekennzeichnet, daß die Elemente (4) auf einer Trägerschicht (5) aufgebracht sind.

3. Einrichtung nach Anspruch 1 oder 2, dadurch gekennzeichnet, daß die Elemente (4) mittels eines Klebers auf dem Trägermaterial bzw. der Trägerschicht (5) befestigt oder in das Trägermaterial eingelagert sind.

4. Einrichtung nach einem der vorhergehenden Ansprüche, dadurch gekennzeichnet, daß die Elemente (4) aus scharfkantigen bzw. splitterförmigen Teilchen bestehen.

5. Einrichtung nach einem der vorhergehenden Ansprüche, dadurch gekennzeichnet, daß die Elemente (4) aus Korund, Glas, Sand, Metall oder Kunststoff bestehen.

6. Einrichtung nach einem der vorhergehenden Ansprüche, dadurch gekennzeichnet, daß auf den beiden einander gegenüberliegenden Flächen der zu verbindende Teil jeweils eine Lage aus Elementen (4) vorgesehen ist.

7. Einrichtung nach einem der vorhergehenden Ansprüche, dadurch gekennzeichnet, daß die Elemente (4) auf einer Folie (7) als Trägerschicht aufgebracht sind, die an einem der zu verbinden den Teile befestigt ist.

8. Einrichtung nach Anspruch 7, dadurch gekennzeichnet, daß die Folie (7) selbstklebend ausgebildet ist.

## Claims

1. A device for mating a first part (1) having a recess, hollow or the like (2) with a second part (3) designed to mate with said recess, hollow or the like, with members (4) of grainy, rigid material provided on the outer surface of one of the parts (1, 3) substantially arranged to project at a right angle to the direction of mating, wherein the length of said members (4) projecting at a right angle to the direction of mating is larger than the distance between the surface provided with the members and the mating surface on the other part and said members (4) are provided on a flexible base material to produce a flexible tilting movement when the two parts (1, 3) are moved relative to each other, said members (4) being arranged on at least part of the inner surface of said first part (1) and/or on the outer surface of said second part (3).

2. A device according to claim 1 wherein the members (4) are provided on a base layer (5).

3. A device according to claim 1 or 2 wherein the members (4) are secured to the base material or base layer (5) by means of an adhesive or are cemented in the base material.

4. A device according to any of the previous claims wherein the members (4) comprise sharp-edged or splinter-shaped particles.

5. A device according to any of the previous claims wherein the members (4) are of corundum, glass, sand, metal or plastic.

6. A device according to any of the previous claims wherein a layer of members (4) is provided on the two opposing surfaces of the parts to be mated together.

7. A device according to any of the previous claims wherein the members (4) are provided on a film (7) forming the base layer, secured to one of the parts to be mated together.

8. A device according to claim 7 wherein the film (7) is self-adhesive.

## Revendications

1. Dispositif destiné à relier une première partie (1) qui comporte un évidement, une concavité ou similaire (2), à une deuxième partie (3) insérable par coulissement dans l'évidement, la concavité ou similaire, des éléments (4) en une matière granulée rigide faisant saillie essentiellement perpendiculairement à la direction d'insertion sur la surface extérieure d'une des parties (1, 3), caractérisé en ce que la dimension, des éléments (4) faisant saillie transversalement à la direction d'insertion est supérieure à la distance entre la surface munie des éléments et la surface en regard sur l'autre partie, et en ce que les éléments (4) sont appliqués sur une matière de support élastique déformable et, lors du mouvement relatif des deux parties (1, 3) entre elles, effectuent un mouvement de basculement élastique, les éléments (4) étant prévus sur au moins une partie de la surface intérieure de la première partie (1) et/ou de la surface extérieure de la deuxième partie (3).

2. Dispositif selon la revendication 1, caractérisé en ce que les éléments (4) sont appliqués sur une couche de support (5).

3. Dispositif selon la revendication 1 ou 2, caractérisé en ce que les éléments (4) sont fixés au moyen d'un colle sur la matière de support ou couche de support (5) ou sont logés dans la matière de support.

4. Dispositif selon l'une des revendications précédentes, caractérisé en ce que les éléments (4) consistent en des particules à arêtes vives ou en forme d'éclats.

5. Dispositif selon l'une des revendications précédentes, caractérisé en ce que les éléments (4) consistent en des particules à arêtes vives ou en forme d'éclats.

5. Dispositif selon l'une des revendications précédentes, caractérisé en ce que les éléments (4) sont en corindon, verre, sable, métal ou matière synthétique.

6. Dispositif selon l'une des revendications précédentes, caractérisé en ce que sur chacune des deux surfaces en regard l'une de l'autre des parties à relier est respectivement prévue une couche d'éléments (4).

7. Dispositif selon l'une des revendications précédentes, caractérisé en ce que les éléments (4) sont appliqués sur une feuille (7) sous forme de couche de support qui est fixée sur l'une des parties à relier.

8. Dispositif selon la revendication 7, caractérisé en ce que la feuille est de conception auto-adhésive.

FIG. 1

a

X

Y

Z

1

2

3

5

4

1

FIG. 2

a

X

Y

Z

1

2

3

5

5'

4

1

FIG. 3

a →

Z  Y  X

5

2

3

5

4

1

1

FIG. 4

a →

Z  Y  X

5

2

3

5

4

1

1

FIG. 5

FIG. 6

FIG. 7

FIG. 8

FIG. 9